# EUROPEAN PATENT APPLICATION

(11) **EP 1 603 348 A2**
(43) Date of publication of application: **07.12.2005**
(21) Application number: 05011484.2
(22) Date of filing: 27.05.2005
(51) Int. Cl.: H04Q 7/22

(54) **Message transfer service**

(30) Priority: 31.05.2004 KR 2004039214
(71) Applicant: LG ELECTRONICS INC., Seoul (KR)
(72) Inventor: Lee, Song-Hak, Seoul (KR)
(74) Representative: von Hellfeld, Axel

(57) **Abstract**

A message transfer service is provided. A transfer system is configured to provide a message transfer service in a mobile communication system and includes an origination terminal configured to create a message and send the message to a destination terminal. The transfer system also includes a server communicatively coupled to the origination terminal, configured to receive the message, and to transmit the message to a destination terminal or to transfer the message to an alternate terminal based on a state of the destination terminal. The server may preferably be configured to unconditionally transfer the message if the message transfer service has been set in the message received from the origination terminal, or when the destination terminal does not respond to a paging by the server, or when the destination terminal is in a power-off state.

## Description

### FIELD OF THE INVENTION

The present invention relates generally to mobile communication systems and, more particularly, to a message transfer service in a mobile communication system.

### BACKGROUND OF THE INVENTION

Synchronous and asynchronous mobile communication systems such as GSM (Global System for Mobile communication), GPRS (General Packet Radio Service) and WCDMA (Wideband-Code Division Multiple Access) provide various supplementary services for subscriber's convenience. A call transfer service and a short message service (SMS) are examples of supplementary services provided by the mobile communication systems.

The short message service may be sent to any subscriber and has a relatively short length (commonly 80 bytes ~ 160 bytes). The short message may be sent phone-to-phone or from a Web site to a mobile terminal in order to provide various services such as e-mail transmission or Internet access.

Even when the mobile terminal is in a power-off state or located in an area where calls are not available, an SMS server keeps the short message until the mobile terminal is switched to a call available state.

The call transfer service is a service for switching a call destined for a terminal 'A' to a different terminal 'B' when the terminal 'A' is not available to receive the call. For the sake of explanation, it is assumed that the terminal 'A' is a 'destination terminal' and the terminal 'B' is a 'call transfer terminal'.

The call transfer service was initially intended to transfer a call destined for a mobile terminal to a fixed line terminal when a subscriber stays at home or in the office. In so doing, the subscriber is able to receive the call without using the mobile terminal, thereby reducing mobile terminal use charges. As the call transfer service becomes more widely adopted and the charges for mobile terminal use are gradually reduced, the call transfer service is becoming more popular.

Conventionally, however, the call transfer service is provided only for voice calls.

### SUMMARY OF THE INVENTION

Accordingly, the present invention is directed to a message transfer service that substantially obviates one or more problems due to limitations and disadvantages of the related art.

An object of the present invention is to provide a system for providing a message transfer service, and its method.

Another object of the present invention is to provide a system for providing a message transfer service capable of notifying a result of transmission of a message to a subscriber, and its method.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in one embodiment, a transfer system configured to provide a message transfer service in a mobile communication system includes an origination terminal configured to create a message and send the message to a destination terminal. The transfer system also includes a server communicatively coupled to the origination terminal, configured to receive the message and to transfer the message to an alternate terminal based on a state of the destination terminal.

The server may preferably be configured to unconditionally transfer the message if the message transfer service has been set in the message received from the origination terminal. Alternatively, the server may preferably be configured to transfer the message when the message transfer service has been set in the message received from the origination terminal and the destination terminal does not respond to a paging by the server. Alternatively, the server may preferably be configured to transfer the message when the message transfer service has been set in the message received from the origination terminal and the destination terminal is in a power-off state.

The server may preferably comprise, in its subscriber database, a first field configured to indicate whether a message transfer service has been set and a second field configured to indicate an identification number of a message transfer terminal. The server may also preferably comprise, in its subscriber database, a third field configured to indicate a condition for message transfer and a fourth field configured to indicate whether a result of transmission of a message is to be notified to the origination terminal.

The server may preferably notify a transmission result pertaining to transmission of the message to the origination terminal. The server may preferably notify the transmission result using a delivery message, such as for example, an SMS-DELIVER message. The server may preferably store an identification number of the origination terminal in a memory to be used in notifying the transmission result.

The mobile communication system may preferably be an asynchronous mobile communication system. The server may preferably be a message service center, such as for example, a short message service (SMS) center.

The server may preferably register or release a message transfer identification number through a command message, such as for example, an SMS-COMMAND message. The command message may preferably comprise information pertaining to an identification number of the message transfer terminal. The command message may also preferably comprise information pertaining to a condition of message transfer and information configured to indicate whether a result of transmission of a message is to be notified to the origination terminal. The command message may also preferably include message transfer service-related information in, for example, a TP-Command-Type parameter.

In another embodiment, a system configured to provide a message transfer service comprises an origination terminal configured to generate and transmit a message, and a destination terminal communicatively coupled to the origination terminal, configured to receive the message. The transfer system also includes a server communicatively coupled to the destination terminal, configured to transfer the message to an alternate terminal when the destination terminal is unavailable.

In yet another embodiment, a method for providing a message transfer service includes transmitting a message from an origination terminal to a server and, in the server, determining whether the message is to be transmitted to a destination terminal or whether it is to be transferred to an alternate terminal. The method also includes transmitting the message to the destination terminal or to the alternate terminal based on the determining in the server.

The determining whether the message is to be transmitted to a destination terminal or whether it is to be transferred to an alternate terminal in the server may preferably include checking whether a message transfer service has been set for the message and checking a condition of message transfer if the message transfer service has been set. The determining in the server may also preferably include performing message transfer according to the condition of the message transfer.

The condition of the message transfer may preferably be selected from at least one of unconditional message transfer, message transfer in case of no-response to paging, and message transfer in case that the destination terminal is in a power-off state.

A subscriber database of the server, may preferably include a first field indicating whether a message transfer service has been set and a second field indicating an identification number of a message transfer terminal. The subscriber database of the server may also preferably include a third field indicating a condition for message transfer and a fourth field indicating whether a result of transmission of a message is to be notified to the origination terminal.

The method may also preferably include notifying, by the server, a result of transmission of the message to the origination terminal. The notifying may preferably be performed using a delivery message. The method may also preferably include storing an identification number of an origination terminal in the server.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.

Figure 1 is a diagram illustrating a network structure of an asynchronous mobile communication system, in accordance with the present invention.

Figure 2 is a diagram illustrating a table of information stored in a subscriber database of a message service center, according to an embodiment of the present invention.

Figures 3A to 3C are flow diagrams of a message transfer procedure of the message service center, according to various embodiments of the present invention.

Figure 4 is a signal flow diagram of a message transmission procedure of a message transfer service, according to an embodiment of the present invention.

Figure 5A is a diagram illustrating an example of a message transfer notification message, according to an embodiment of the present invention.

Figure 5B is a diagram illustrating an example of a transmission result notification message, according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

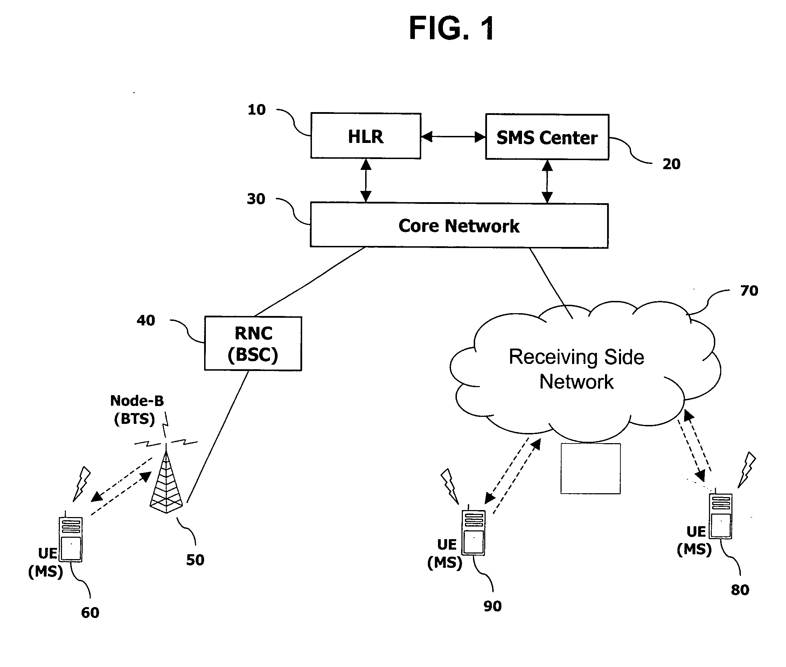

Figure 1 is a diagram illustrating a network structure of an asynchronous mobile communication system, in accordance with the present invention.

Referring to Figure 1, an asynchronous mobile communication system in accordance with the present invention includes an origination terminal (user equipment (UE) or a mobile station (MS)) 60 configured to transmit a voice signal or a message of a subscriber to a wireless section. The asynchronous mobile communication system also includes a base station (base-station transceiver sub-system (BTS) or a Node B) 50 configured to convert the message of the origination terminal 60 received through the wireless section into a signal suitable for a fixed line section and to transmit the signal to a base station controller (BSC) (or radio network controller (RNC). The asynchronous mobile communication system also includes a message service center, such as for example, a short message service (SMS) center 20 configured to receive the message through the BSC 40 and a core network (CN) 30 and to transmit the message to a destination terminal 80 or a message transfer terminal 90. The message may be transmitted from the SMS center 20 with reference to message transfer information stored in a subscriber database, and an HLR (Home Location Register) 10 for recognizing a position and a state of a subscriber between the CN 30 and the SMS center 20, and authenticating the subscriber.

In one embodiment, in a message transfer method in accordance with the present invention, a SMS-COMMAND message is used for setting a message transfer service. Various parameters included in the SMS-COMMAND message are described below.

Table 1 shows an exemplary format of the SMS-COMMAND message.

**Table 1**

| **Abbr.** | **Reference** | **P**^{**1)**} | **R**^{**2)**} | **Description** |
|---|---|---|---|---|
| TP-MTI | TP-Message-Type-Indicator | M | 2b | Parameter describing the type |
| TP-UDHI | TP-User-Data-Header-Indication | O | b | Parameter indicating that the TP-CD field contains a Header |
| TP-SRR | TP-Status-Report- Request | O | b | Parameter indicating if the SMS Command is requesting a status report. |
| TP-MR | TP-Message Reference | M | I | Parameter identifying the SMS-COMMAND |
| TP-PID | TP-Protocol- Identifier | M | o | Parameter identifying the above layer protocol, if any |
| TP-CT | TP-Command-Type | M | o | Parameter specifying which operation is to be performed on a SM |
| TP-MN | TP-Message-Number | M³⁾ | o | Parameter indicating which SM in the SC to operate on |
| TP-DA | TP-Destination-Address | M⁴⁾ | 2-12o | Parameter indicating the Destination Address to which the TP-Command refers |
| TP-CDL | TP-Command-Data-Length | M | o | Parameter indicating the length of the TP-CD field in octets |
| TP-CD | TP-Command-Data | O | o | Parameter containing user data |

The SMS-COMMAND message shown in Table 1 may preferable be an extended message of an SMS-COMMAND message defined in a 3GPP TS23.040. The SMS-COMMAND message may enable a subscriber to instruct a state referring, a state reporting, and a canceling or deleting a command with respect to a message that originated by the subscriber.

One of the SMS-COMMAND parameters may preferably be, a TP-Command-Type ('TP-CT') which describes a command for instruction to the SMS center 20. Table 2 shows exemplary values that may determine the TP-CT parameter.

**Table 2**

| **Value (bit 7 ... 0)** | **Command Description** |
|---|---|
| 00000000 | Enquiry relating to previously submitted message |
| 00000001 | Cancel Status Report Request relating to previously submitted message |
| 00000010 | Delete previously submitted Message |
| 00000011 | Enable Status Report Request relating to previously submitted message |
| **00000100** **.** **.** **.** **00011111** | **Reserved** |
| 11100000 . . . 11111111 | Values specific for each SC |

Various commands related to a message transfer service may preferably be defined using reservation bits (0000100~00011111) of the TP-CT parameter. The SMS center may preferably perform various message transfer procedures with reference to the reservation bits such as those defined in Table 3 or Table 4, below.

Table 3 shows exemplary commands for registering or deleting an identification number of a message transfer terminal ('message transfer identification number') preferably defined by using the reservation bits of the TP-CT parameter.

**Table 3**

| **Value (bit 7 ... 0)** | **Command Description** |
|---|---|
| **00000100** | Registering a message transfer identification number and notifying it to the other party |
| **00000101** | Registering a message transfer identification number and not notifying it to the other party |
| **00000110** | Deleting message transfer identification number |

In Table 3, B'00000110 is a command for instructing 'registering a message transfer identification number and notifying it to the other party', B'00000101 is a command for instructing 'registering a message transfer identification number and not notifying it to the other party, and B'00000110 is a command for instructing 'Deleting message transfer identification number'. Thus, when a subscriber wants to register the message transfer identification number in the SMS center 20, the TP-CT parameter value of the SMS-COMMAND may preferably be set as B'00000100 or B'00000101. Conversely, when the subscriber wants to delete the CTIN, the TP-CT parameter value may preferably set as B'00000100.

In an embodiment, when the TP-CT parameter value is set as B'00000100, the SMS center 20 may transfer a message transfer notification message to the origination terminal 60 only when message transfer is successful. If the message transfer fails, the SMS center 20 may not transfer the notification message.

In another embodiment, when the TP-CT parameter value is set as B'00000110 in order to delete the message transfer identification number, the SMS center 20 may preferably initialize the parameter values related to message transfer (e.g., a message transfer flag, a message transfer identification number, a condition for message transfer, etc.).

In yet another embodiment, when the TP-CT parameter value is set as B'00000100 or B'00000101, in order to register the message transfer identification number, the TP-Command-Data (TP-CD) parameter may preferably include message transfer identification number information.

Table 4 shows exemplary message transfer commands defined using the reservation bits of the TP-CT parameter. When a state of the destination terminal 80 satisfies the condition defined for each command, the SMS center 20 may preferably perform the message transfer procedure.

**[Table 4]**

| **Value (bit 7 ... 0)** | **Command Description** |
|---|---|
| **00000111** | Message transfer is performed unconditionally |
| **00001000** | Message transfer is performed in case of no-response to paging |
| **00001001** | Message transfer is performed when a destination terminal is in a power-off state |

Message transfer may preferably be unconditionally performed, regardless of a state of the destination terminal. Alternatively, message transfer may preferably be performed according to a specific condition ('conditional message transfer').

The conditional message transfer may preferably include two conditions. A first condition may be that message transfer is performed when the destination terminal 80 does not respond to a request for paging. A second condition may be that message transfer is performed when the destination terminal 80 is in the power-off state.

As shown in Table 4, when the TP-CT parameter is set as B'00001000, the SMS center 20 may preferably perform message transfer if the destination terminal 80 does not respond to a request for paging. Alternatively, when the TP-CT parameter is set as B'00001001, the SMS center 20 may preferably perform message transfer if the destination terminal 80 is in the power-off state. Alternatively, when the TP-CT parameter is set as B'00000111, the SMS center 20 may preferably perform message transfer unconditionally regardless of a state of the destination terminal 80. The SMS center 20 may preferably consider information stored in the subscriber database as well as the SMS-COMMAND message when performing message transfer service.

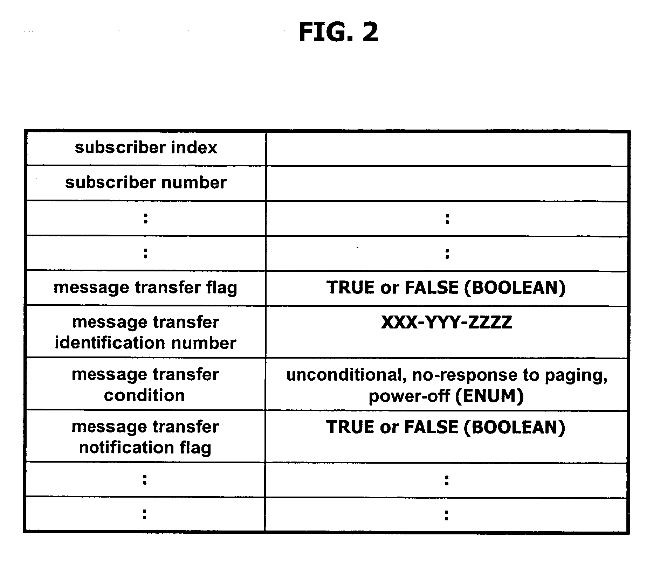

Figure 2 is a diagram illustrating a table of information stored in a subscriber database of a message service center, according to an embodiment of the present invention.

Referring to Figure 2, the subscriber database in accordance with the present invention may preferably further include a message transfer flag, a message transfer identification number, a message transfer condition and a transmission result notification flag.

The message transfer flag field may preferably indicate whether or not a message is to be message-transferred. The message transfer flag field may be set, for example, to 'TRUE' (message transfer flag = 'TRUE') when the origination subscriber has registered the message transfer identification number using the SMS-COMMAND message. When the registered message transfer identification number is deleted, the message transfer flag field may be released by, for example, being set as 'FALSE' (message transfer flag = 'FALSE').

The message transfer identification number field may preferably store an identification number of a terminal for receiving a message-transferred message. When the subscriber instructs registration of the message transfer identification number, the message transfer identification numbers may preferably be stored. The message transfer identification number may preferably be transferred as a TP-CD parameter of the SMS-COMMAND. Conversely, when the subscriber instructs deletion of the message transfer identification number, the stored information may preferably be deleted.

The message transfer condition field may preferably indicate a condition of message transfer of a message. The message transfer condition field may preferably also store one or more of the condition values that are set using the SMS-COMMAND message. Examples of the condition values may be stored include, 'Message transfer is performed unconditionally', 'Message transfer is performed in case of no-response to paging' and 'Message transfer is performed when a destination terminal is in a power-off state'

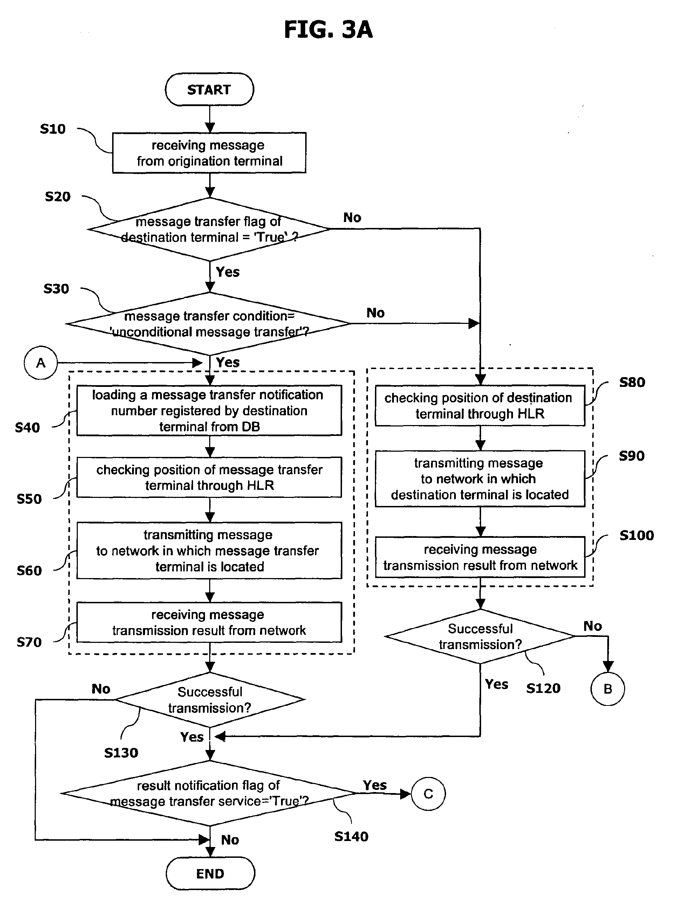

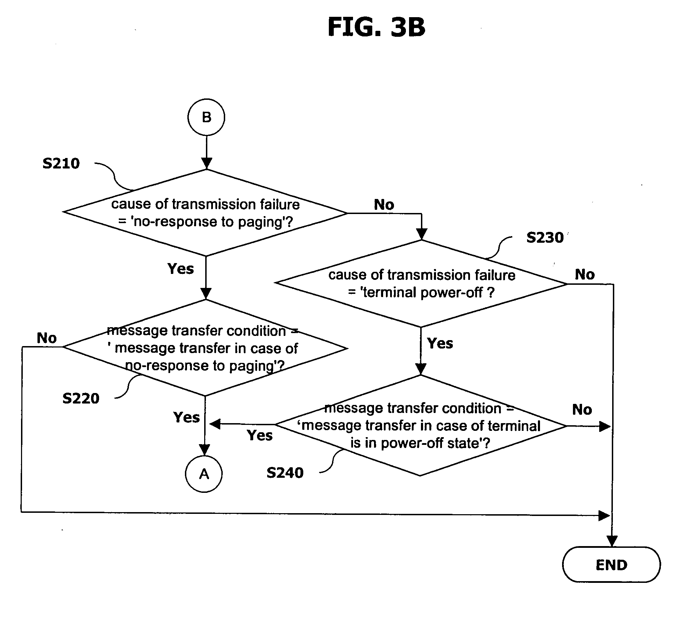

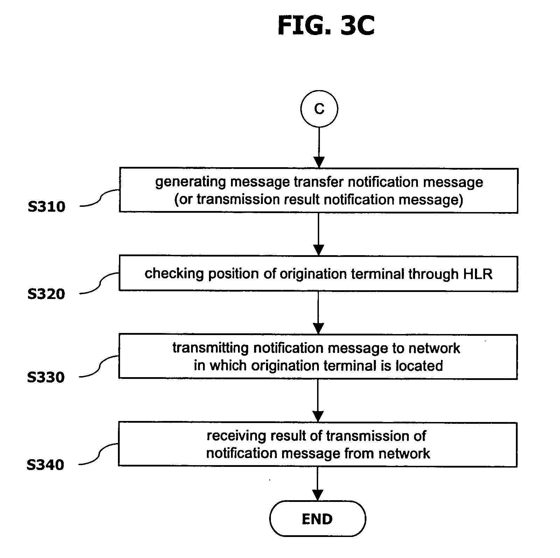

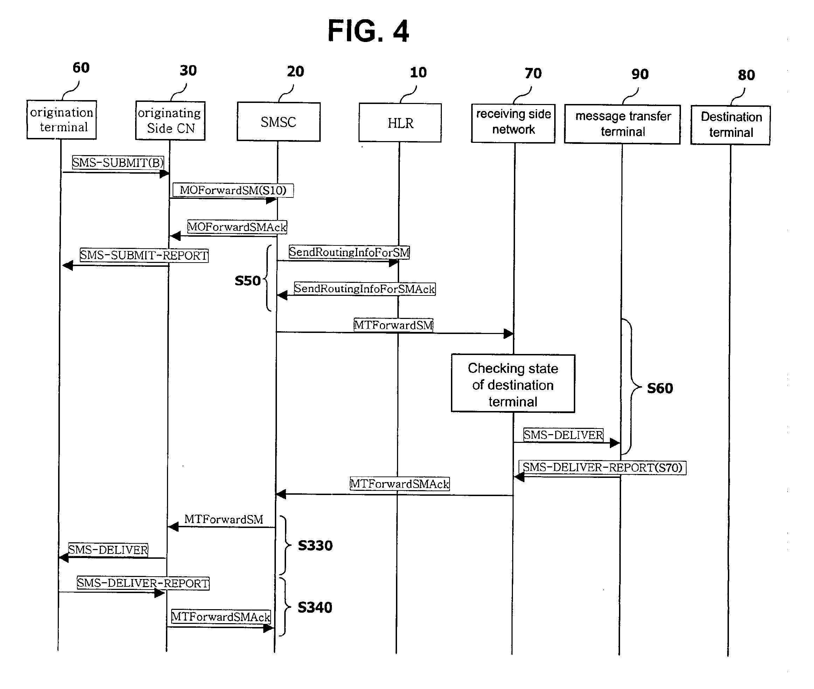

Figures 3A to 3C are flow diagrams of a message transfer procedure of the message service center, according to various embodiments of the present invention, and Figure 4 is a signal flow diagram of a message transmission procedure of a message transfer service, according to an embodiment of the present invention.

In an embodiment, for the sake of explanation, it is assumed that various information required for the message transfer service have already been transferred to the SMS center 20 through the SMS-COMMAND message sent by the origination terminal 60. The various information may preferably include the message transfer flag, the message transfer identification number, the message transfer condition, and the transmission result notification flag. An embodiment of a method for message-transferring a message in accordance with the present invention is described with reference to Figures 3A to 3C and Figure 4, below.

In the embodiment, when a subscriber creates a message, the origination terminal 60 may preferably transfer the created message to the base station 50. The message may then be transferred to the SMS center 20 via the BSC 40 and the CN 30 (step S10). The SMS center 20 may receive the message, may check set values of the message transfer flag and the message transfer condition of the destination terminal 80. If the message transfer flag of the destination terminal 80 is set as 'True' and the condition of the message transfer is 'unconditional message transfer' (SMS Forwarding-Unconditional), the SMS center 20 may preferably perform a message processing procedure (steps S40~S70) according to the message transfer service. However, if the message transfer flag of the destination terminal 80 is set as 'False', the SMS center 20 may preferably perform a general message processing procedure (step S80~S100). Furthermore, if the message transfer flag is set as 'True', and the message transfer condition is 'message transfer in case of no-response to paging' or 'message transfer in case that destination terminal is in a power-off state', the SMS center 20 may preferably perform the message processing procedure (steps S80~S100).

Additionally, if the message transfer flag of the destination terminal 80 is set as 'True' and the message transfer condition is 'unconditional message transfer', the SMS center 20 may preferably load the message transfer identification number from the subscriber database (step S40). The SMS center 20 may check the position of the message transfer terminal 90 through the HLR 10 (step S50).

Upon loading the message transfer identification number and checking the position of the message transfer terminal 90 through the steps S40 and S50, the SMS center 20 may preferably transmit the message to the network 70 in which the message transfer terminal 90 is positioned (step S60). The SMS center 20 may then be informed about a transmission result (notified result) of the message by the network 70 (step S70).

If the notified result is 'successful transmission', the SMS center 20 may preferably check a set value of the transmission result notification flag and may determine whether to notify the message transmission result to the origination terminal 60 (steps S130 and S140).

If the transmission result notification flag is set as 'True', the SMS center 20 may preferably generate a message providing information about the message transmission result ('message transfer notification message') (step S310). The SMS center 20 may also check the position of the origination terminal 60 through the HLR 10 (step S320) and transmit the message to the network 70 in which the destination terminal 80 is positioned (step S330). The SMS center 20 may then be informed about the result of transmission of the message by the network 70 after lapse of a predetermined amount of time (step S340).

On the contrary, if the transmission result notification flag is set as 'False', the SMS center 20 may preferably not transmit the message transfer notification message to the origination terminal 60. Furthermore, if the notified result shows 'transmission failed', the message transfer procedure of the SMS center 20 may preferably be terminated.

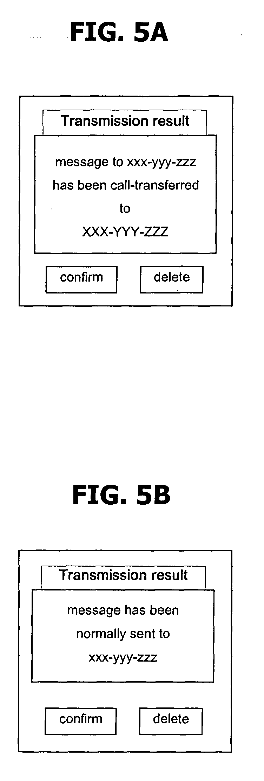

Figure 5A is a diagram illustrating an example of a message transfer notification message, according to an embodiment of the present invention.

In order to notify the message transmission result to the origination terminal 60, the SMS center 20 may preferably include a function of storing the identification number of the origination terminal 60. The SMS center 20 may also transmit the message transfer notification message using a general SMS-DELIVER message. The message transfer notification message may preferably include the message transfer identification number.

During the checking process (step S30), if the message transfer flag of the destination terminal 80 is set as 'False' or if the message transfer flag is set as 'True' but the message transfer condition is 'message transfer in case of no-response to paging (TP-CT=00001000) or 'message transfer in case that the destination terminal is in power-off state (TP-CT=00001001), the SMS center 20 may preferably check a position of the destination terminal 80 through the HLR 10 (step S80). Upon checking the position of the destination terminal 80, the SMS center 20 may preferably transmit the message to the network 70 in which the destination terminal 80 is positioned (step S90). The SMS center 20 may then receive the result of transmission of the message from the network 70 after lapse of a predetermined amount of time (step S100).

Furthermore, if the received result shows 'successful transmission', the SMS center 20 may preferably check a set value of the transmission result notification flag to determine whether the message transmission result is to be notified (sent as notification) to the origination terminal 60 (steps S130 and S140). If the transmission result notification flag is set as 'True', the SMS center 20 may preferably generate a message providing information about the message transmission result ('transmission result notification message'). The SMS center 20 may also transmit the transmission result notification message to the origination terminal 60 (steps S310~S340).

On the contrary, if the transmission result notification flag is set as 'False', the SMS center 20 may preferably not transmit the transmission result notification message to the origination terminal 60.

Additionally, if the received result shows 'transmission failed', the SMS center 20 may preferably inspect a cause of the transmission failure. If the transmission failure is caused by 'no-response to paging' or 'the destination terminal is in power-off state', the SMS center 20 may preferably perform the message processing procedure (steps S40~S70) according to the message transfer service.

Figure 5B is a diagram illustrating an example of a transmission result notification message, according to an embodiment of the present invention.

In order to notify the message transmission result to the origination terminal 60, the SMS center 20 may preferably include a function of storing the identification number of the origination terminal 60. The SMS center 20 may also transmit the transmission result notification message using a general SMS-DELIVER message.

In an embodiment, a transfer system configured to provide a message transfer service in a mobile communication system includes an origination terminal configured to create a message and send the message to a destination terminal. The transfer system also includes a server communicatively coupled to the origination terminal, configured to receive the message and to transfer the message to an alternate terminal based on a state of the destination terminal.

The server may preferably be configured to unconditionally transfer the message if the message transfer service has been set in the message received from the origination terminal. Alternatively, the server may preferably be configured to transfer the message when the message transfer service has been set in the message received from the origination terminal and the destination terminal does not respond to a paging by the server. Alternatively, the server may preferably be configured to transfer the message when the message transfer service has been set in the message received from the origination terminal and the destination terminal is in a power-off state.

The server may preferably comprise, in its subscriber database, a first field configured to indicate whether a message transfer service has been set and a second field configured to indicate an identification number of a message transfer terminal. The server may also preferably comprise, in its subscriber database, a third field configured to indicate a condition for message transfer and a fourth field configured to indicate whether a result of transmission of a message is to be notified to the origination terminal.

The server may preferably notify a transmission result pertaining to transmission of the message to the origination terminal. The server may preferably notify the transmission result using a delivery message, such as for example, an SMS-DELIVER message. The server may preferably store an identification number of the origination terminal in a memory to be used in notifying the transmission result.

The mobile communication system may preferably be an asynchronous mobile communication system. The server may preferably be a message service center, such as for example, a short message service (SMS) center.

The server may preferably register or release a message transfer identification number through a command message, such as for example, an SMS-COMMAND message. The command message may preferably comprise information pertaining to an identification number of the message transfer terminal. The command message may also preferably comprise information pertaining to a condition of message transfer and information configured to indicate whether a result of transmission of a message is to be notified to the origination terminal. The command message may also preferably include message transfer service-related information in, for example, a TP-Command-Type parameter.

In another embodiment, a system configured to provide a message transfer service comprises an origination terminal configured to generate and transmit a message, and a destination terminal communicatively coupled to the origination terminal, configured to receive the message. The transfer system also includes a server communicatively coupled to the destination terminal, configured to transfer the message to an alternate terminal when the destination terminal is unavailable.

In yet another embodiment, a method for providing a message transfer service includes transmitting a message from an origination terminal to a server and, in the server, determining whether the message is to be transmitted to a destination terminal or whether it is to be transferred to an alternate terminal. The method also includes transmitting the message to the destination terminal or to the alternate terminal based on the determining in the server.

The determining whether the message is to be transmitted to a destination terminal or whether it is to be transferred to an alternate terminal in the server may preferably include checking whether a message transfer service has been set for the message and checking a condition of message transfer if the message transfer service has been set. The determining in the server may also preferably include performing message transfer according to the condition of the message transfer.

The condition of the message transfer may preferably be selected from at least one of unconditional message transfer, message transfer in case of no-response to paging, and message transfer in case that the destination terminal is in a power-off state.

The subscriber database of the server may preferably include a first field indicating whether a message transfer service has been set and a second field indicating an identification number of a message transfer terminal. The subscriber database of the server may also preferably include a third field indicating a condition for message transfer and a fourth field indicating whether a result of transmission of a message is to be notified to the origination terminal.

The method may also preferably include notifying, by the server, a result of transmission of the message to the origination terminal. The notifying may preferably be performed using a delivery message. The method may also preferably include storing an identification number of an origination terminal in the server.

Using the present invention, asynchronous mobile communication systems may perform message transfer service for short message service (SMS), medium message service (MMS), long message service (LMS), or any other type of message service. Thus, although several references are made herein to short messaging (SM), the present invention may be applied to any type of messaging. Furthermore, because the transmission result of the message is notified to a subscriber, the subscriber may be provided with a more convenient and enhanced message service.

It will be apparent to those skilled in the art that various modifications and variations may be made in the present invention without departing from the spirit or scope of the inventions. Thus, it is intended that the present invention covers the modifications and variations of this invention provided they come within the scope of the appended claims and their equivalents.

## Claims

1. A transfer system configured to provide a message transfer service in a mobile communication system, the transfer system comprising:
an origination terminal configured to create a message and send the message to a destination terminal; and
a server communicatively coupled to the origination terminal, configured to receive the message and to transfer the message to an alternate terminal based on a state of the destination terminal.

2. The transfer system of claim 1, wherein the server is configured to unconditionally transfer the message if the message transfer service has been set in the message received from the origination terminal.

3. The transfer system of claim 1, wherein the server is configured to transfer the message when the message transfer service has been set in the message received from the origination terminal and the destination terminal does not respond to a paging by the server.

4. The transfer system of claim 1, wherein the server is configured to transfer the message when the message transfer service has been set in the message received from the origination terminal and the destination terminal is in a power-off state.

5. The transfer system of claim 1, wherein the server comprises, in its subscriber database:
a first field configured to indicate whether a message transfer service has been set;
a second field configured to indicate an identification number of a message transfer terminal;
a third field configured to indicate a condition for message transfer; and
a fourth field configured to indicate whether a result of transmission of a message is to be notified to the origination terminal.

6. The transfer system of claim 1, wherein the server notifies a transmission result pertaining to transmission of the message to the origination terminal.

7. The transfer system of claim 6, wherein the server notifies the transmission result using a delivery message.

8. The transfer system of claim 6, wherein the server stores an identification number of the origination terminal in a memory to be used in notifying the transmission result.

9. The transfer system of claim 1, wherein the mobile communication system is an asynchronous mobile communication system.

10. The transfer system of claim 1, wherein the server is a message service center.

11. The transfer system of claim 1, wherein the server registers or releases a message transfer identification number through a command message.

12. The transfer system of claim 11, wherein the command message comprises:
information pertaining to an identification number of the message transfer terminal;
information pertaining to a condition of message transfer; and
information configured to indicate whether a result of transmission of a message is to be notified to the origination terminal.

13. The transfer system of claim 11, wherein the command message comprises message transfer service-related information.

14. A system configured to provide a message transfer service, comprising:
an origination terminal configured to generate and transmit a message;
a destination terminal communicatively coupled to the origination terminal, configured to receive the message;
a server communicatively coupled to the destination terminal, configured to transfer the message to an alternate terminal when the destination terminal is unavailable.

15. A method for providing a message transfer service, comprising:
transmitting a message from an origination terminal to a server;
in the server, determining whether the message is to be transmitted to a destination terminal or whether it is to be transferred to an alternate terminal; and
transmitting the message to the destination terminal or to the alternate terminal based on the determining whether the message is to be transmitted to the destination terminal or whether it is to be transferred to the alternate terminal.

16. The method of claim 15, wherein the determining in the server further comprises:
checking whether a message transfer service has been set for the message; checking a condition of message transfer if the message transfer service has been set; and
performing message transfer according to the condition of the message transfer.

17. The method of claim 16, wherein the condition of the message transfer comprises at least one of:
unconditional message transfer;
message transfer in case of no-response to paging; and
message transfer in case that the destination terminal is in a power-off state.

18. The method of claim 15, wherein a subscriber database of the server, comprises:
a first field indicating whether a message transfer service has been set;
a second field indicating an identification number of a message transfer terminal;
a third field indicating a condition for message transfer; and
a fourth field indicating whether a result of transmission of a message is to be notified to the origination terminal.

19. The method of claim 15, further comprising:
notifying, by the server, a result of transmission of the message to the origination terminal.

20. The method of claim 19, wherein the notifying is performed using a delivery message.

21. The method of claim 19, further comprising storing an identification number of an origination terminal in the server.

22. The method of claim 15, wherein the mobile communication system is an asynchronous mobile communication system.

23. The method of claim 15, wherein the server is a message service center.

24. The method of claim 15, wherein the server registers or releases a message transfer identification number through a command message.

25. The method of claim 24, wherein the command message comprises:
information pertaining to an identification number of the message transfer terminal;
information pertaining to a condition of message transfer; and
information for indicating whether a result of transmission of a message is to be notified to the origination terminal.

26. The method of claim 24, wherein the command message includes message transfer service-related information.
